# FASCICULE DE BREVET EUROPEEN

(11) **EP 3 696 389 B1**
(45) Date de publication et mention de la délivrance du brevet: **28.08.2024**
(21) Numéro de dépôt: 20155293.2
(22) Date de dépôt: 04.02.2020
(51) Int. Cl.: F02C 7/14, F28F 1/18, F28F 13/08

(54) **ÉCHANGEUR DE CHALEUR AIR-HUILE**
LUFT-ÖL-WÄRMETAUSCHER
AIR-OIL HEAT EXCHANGER

(30) Priorité: 18.02.2019 BE 201905105
(43) Date de publication de la demande: 19.08.2020
(73) Titulaire: Safran Aero Boosters SA, 4041 Herstal (BE)
(72) Inventeur: CLEYET, Florian, 4041 Herstal (BE); SERVAIS, Bruno, 4041 Herstal (BE); FEZAS, Aurore, 4041 Herstal (BE)
(74) Mandataire: Lecomte & Partners

(56) Documents cités:
- EP-A1- 2 913 616
- EP-A1- 3 012 436
- EP-A2- 1 898 069
- WO-A1-2014/120125

## Description

### Domaine technique

L'invention se rapporte au domaine des échangeurs de chaleur de turbomachine. Plus précisément, l'invention propose un échangeur de chaleur air/huile de turbomachine.

### Technique antérieure

Il est connu d'employer des échangeurs de chaleur pour refroidir l'huile de lubrification ou de refroidissement d'une turbomachine. Par exemple, le flux d'air peut parcourir un réseau d'ailettes de refroidissement, qui, par conduction/convection évacuent dans le flux d'air la chaleur de l'huile. L'échangeur standard s'étend dans la veine de circulation d'air avec une série d'ailettes planes orientées radialement et supportées par une paroi tubulaire évidée et parcourue par l'huile. Un exemple est présenté dans le document WO 2014/120125 A1, qui montre un échangeur standard de forme parallélépipédique présentant une importante résistance à l'air.

En effet, les ailettes de refroidissement peuvent perturber l'écoulement du flux d'air dans la veine et donc impacter le rendement de la turbomachine. Il existe donc un besoin d'amélioration de la conception d'un échangeur de ce type.

### Résumé de l'invention

### Problème technique

L'invention a pour objectif de proposer un échangeur de chaleur qui minimise les pertes aérodynamiques dans le flux d'air induites par la présence de l'échangeur dans la veine. Aussi, les pertes aérodynamiques induites par l'écoulement de l'air au coeur de l'échangeur sont réduites. L'invention vise également à améliorer l'échange thermique et à proposer un échangeur avec un poids réduit en comparaison des échangeurs existants.

### Solution technique

L'invention a pour objet un échangeur de chaleur selon la revendication 1.

Une autre définition possible de l'invention est un échangeur de chaleur, comprenant : un réseau d'ailettes délimitant des couloirs pour l'écoulement d'un premier fluide selon une direction principale d'écoulement ; et une enveloppe entourant le réseau d'ailettes, l'enveloppe étant munie de passages pour l'écoulement d'un second fluide ; l'enveloppe étant de forme générale arquée, définissant la direction principale d'écoulement du premier fluide, ainsi qu'une direction radiale et une direction circonférentielle, l'enveloppe comprenant une surface extérieure définissant un profil de l'échangeur, vu dans un plan perpendiculaire à la direction principale ; remarquable en ce que selon la direction axiale, le profil varie radialement et circonférentiellement.

La direction radiale et la direction circonférentielle sont toutes deux perpendiculaires à la direction principale d'écoulement, en tout point.

Les variations du profil se traduisent par le fait que le profil de l'enveloppe dans un plan donné perpendiculaire à la direction axiale est différent du profil dans un autre plan, parallèle au plan donné.

Selon des modes avantageux de l'invention, l'échangeur peut comprendre l'une ou plusieurs des caractéristiques suivantes, selon toute combinaison possible :
- l'enveloppe comporte deux parois latérales reliant la paroi interne à la paroi externe ;
- le réseau d'ailettes est circonscrit radialement intérieurement et extérieurement, et circonférentiellement par l'enveloppe. Ainsi, le réseau d'ailettes s'étend radialement de la paroi interne à la paroi externe, et circonférentiellement d'une paroi latérale à l'autre, sans s'étendre au-delà des parois ;
- les parois interne et externe sont arquées, vu dans un plan perpendiculaire à la direction principale d'écoulement, l'enveloppe présentant une hauteur radiale entre la paroi interne et la paroi externe, la hauteur radiale définissant une direction radiale perpendiculaire à la direction principale d'écoulement, la hauteur radiale de l'enveloppe étant variable le long de la direction principale d'écoulement, et l'enveloppe présente une largeur circonférentielle entre les parois latérales définissant une direction circonférentielle perpendiculaire à la direction radiale et à la direction principale d'écoulement, la largeur circonférentielle étant variable long de la direction principale d'écoulement ;
- la hauteur de l'enveloppe et/ou la largeur de l'enveloppe augmentent dans au moins un tiers amont de l'échangeur ;
- la hauteur de l'enveloppe et/ou la largeur de l'enveloppe diminuent dans au moins un tiers aval de l'échangeur ;
- l'au moins un passage s'étend dans la paroi interne et dans la paroi externe, ainsi qu'éventuellement dans l'une au moins des parois latérales. Ainsi, le second fluide peut circuler et venir à proximité de nombreuses ailettes. Augmentant ainsi les échanges thermiques, notamment en comparaison d'un échangeur air-huile avec ailettes radiales dont les ailettes ne seraient radialement en contact avec l'huile qu'à une de leurs extrémités ;
- l'au moins un passage s'étend parallèlement à un plan perpendiculaire à la direction principale d'écoulement du premier fluide ;
- la paroi interne présente une surface interne et une surface externe, toutes deux au contact du premier fluide ;
- la paroi interne présente une surface interne et une surface externe, jointes entre elles en amont par un bord d'attaque et en aval par un bord de fuite. En effet, le flux d'air arrivant au voisinage de l'échangeur se sépare radialement en un flux qui parcourt l'intérieur de l'échangeur et un flux qui le contourne. Après le passage dans l'échangeur, le flux d'air réchauffé par l'échangeur rejoint le flux d'air qui a contourné l'échangeur. La séparation et la réunion des flux peut être source de perturbations aérodynamiques. La conception particulière de l'enveloppe permet de limiter ces perturbations. Le bord d'attaque peut s'étendre de la paroi interne à la paroi externe en passant par les parois latérales pour ne former qu'un bord d'attaque. De même, le bord de fuite peut être commun aux parois interne et externe et latérales ;
- la longueur axiale de l'échangeur varie circonférentiellement entre une valeur minimale et une valeur maximale, ces deux valeurs étant comprises entre 100 et 150 mm. Par exemple, la longueur axiale peut être de 110 mm aux extrémités circonférentielles de l'échangeur et 140 mm au centre circonférentiel. Les minimums et maximums peuvent alternativement prendre toute valeur entre 100 et 150 mm ;
- la hauteur radiale de l'échangeur varie axialement entre une valeur minimale et une valeur maximale, ces deux valeurs étant préférablement comprises entre 5 et 60 mm. Par exemple, la hauteur radiale peut être de 25 mm aux extrémités axiales de l'échangeur et 55 mm à environ un tiers de la longueur axiale de l'échangeur, mesuré depuis l'amont. Les minimums et maximums peuvent alternativement prendre toute valeur entre 5 et 60 mm ;
- la divergence et la convergence du canal comprennent des variations de la largeur circonférentielle de l'enveloppe, axialement, entre une valeur minimale et une valeur maximale ces deux valeurs étant préférablement distinctes d'au moins 10% ;
- Le diamètre moyen de l'arc décrit par l'échangeur peut être compris entre 1 m et 5 m ;
- la hauteur radiale respective de chacun des couloirs varie le long de la direction principale d'écoulement du premier fluide selon la même tendance que la hauteur radiale de l'enveloppe. Par « tendance », on entend que lorsque la hauteur radiale de l'enveloppe augmente sur une portion axiale, celle des couloirs augmente également sur la même portion axiale ;
- la largeur circonférentielle respective de chacun des couloirs varie le long de la direction principale d'écoulement du premier fluide selon la même tendance que la largeur de l'enveloppe.
- les couloirs s'étendent parallèlement à la direction principale d'écoulement du premier fluide ;
- les ailettes s'étendent perpendiculairement aux parois internes et externes, vu dans un plan perpendiculaire à la direction principale d'écoulement du premier fluide ;
- les ailettes forment, vu dans un plan perpendiculaire à la direction principale d'écoulement du premier fluide, des motifs géométriques réguliers ou irréguliers, tels qu'un nid d'abeille, des polygones, des ellipses, les ailettes étant droites ou courbées, ou toute combinaison hétérogène de ces motifs ;
- un même couloir décrit au moins deux motifs de nature différente dans deux plans différents perpendiculaires à la direction axiale, notamment un polygone et une ellipse. Les couloirs peuvent donc avoir une forme qui maximise les échanges de chaleur au coeur de l'échangeur et qui minimise les perturbations aérodynamiques en entrée et en sortie de l'échangeur ;
- l'épaisseur des ailettes varie le long de la direction principale d'écoulement du premier fluide, l'épaisseur étant plus faible au moins dans le tiers aval de l'échangeur. L'épaisseur est préférentiellement plus importante en amont pour rigidifier la structure et assurer sa tenue aux chocs potentiel de matière étrangère (givre, débris). L'épaisseur des ailettes peut varier entre 0.3 mm et 0.8 mm ;
- la rugosité de la surface des ailettes et des parois varie le long de la direction principale d'écoulement du premier fluide, la rugosité diminuant préférentiellement au moins dans le tiers aval de l'échangeur. Une rugosité plus importante vers l'amont permet de mieux ralentir le premier fluide et de créer des turbulences pour améliorer la convection et donc l'échange thermique. En aval, une rugosité plus faible permet de réaccélérer le fluide et faciliter son écoulement en sortie de l'échangeur et sa réintégration dans la veine de circulation d'air. Ceci offre aussi une plus grande flexibilité lors de la fabrication car les contraintes de fabrication (tolérances) sont moins strictes sur une partie de l'échangeur ;
- l'enveloppe et les ailettes sont monoblocs, réalisés par fabrication additive. En particulier, il peut être employé une technique d'ajout de couches (ALM pour additive layer manufacturing en anglais) à partir de poudre métallique et notamment de poudre à base d'aluminium ou de titane ;
- l'échangeur est réalisée en alliage métallique, préférentiellement à base d'aluminium.
- une grille de protection en amont du réseau d'ailettes et en amont de l'au moins un passage du second fluide, la grille étant monobloc avec l'enveloppe et les ailettes. Une telle grille permet de protéger l'échangeur d'éléments étrangers (débris, givre) ;
- une chambre de ralentissement en amont des ailettes et éventuellement en aval de la grille de protection. Afin d'augmenter les échanges de chaleur, le flux d'air est ainsi ralenti, par exemple par l'augmentation de la section de passage en amont de l'échangeur ;
- une chambre d'accélération en aval des ailettes ;
- l'épaisseur des parois de l'enveloppe peut être de plusieurs millimètres. Les passages d'huile dans l'enveloppe peuvent avoir plusieurs millimètres de hauteur et de longueur axiale. Ils s'étendent préférentiellement sur toute l'étendue circonférentielle de l'enveloppe ;
- un collecteur d'entrée et un collecteur de sortie pour le second fluide, les collecteurs étant monoblocs avec l'enveloppe et le réseau d'ailettes. Les collecteurs peuvent être circonférentiellement alignés et décalés axialement l'un de l'autre ;
- un by-pass reliant le collecteur d'entrée au collecteur de sortie, le by-pass étant monobloc avec l'enveloppe et le réseau. Par by-pass, on entend un circuit de dérivation qui permet au second fluide de ne pas parcourir le passage de l'enveloppe. À cette fin, un obturateur ou une vanne, par exemple thermostatique, peut fermer le réseau et ouvrir le by-pass. Ainsi, lorsque l'huile a une température inférieure à un seuil déterminé, elle passe dans le by-pass car il n'est pas utile de la refroidir dans l'échangeur et/ou l'huile n'est pas suffisamment fluide pour parcourir le réseau. Le seuil peut être par exemple 20°C. Le by-pass peut avoir une fonction de décongélation en intégrant des moyens de chauffage notamment des canaux permettant l'écoulement de l'huile chaude depuis le by-pass jusqu'au coeur de l'échangeur ;
- le by-pass permet l'écoulement du second fluide selon une direction sensiblement axiale. En effet, comme les collecteurs sont agencés du même côté de l'échangeur, le by-pass peut être compact et de conception simple ;
- des brides de fixation monoblocs avec l'échangeur. Ces brides peuvent être notamment faites de pattes sensiblement planes, présentant des surépaisseurs recevant des éléments d'assemblage (par exemple filetés).

L'invention a également pour objet une turbomachine comprenant un carter délimitant une veine de circulation d'air et un échangeur de chaleur selon l'un des modes de réalisation décrits ci-dessus agencé dans la veine, le premier fluide étant l'air circulant dans la veine.

Selon des modes avantageux de l'invention, la turbomachine peut comprendre l'une ou plusieurs des caractéristiques suivantes, selon toute combinaison possible :
- la turbomachine est une turbomachine à double flux, comprenant une veine de flux primaire et une veine de flux secondaire, la veine de circulation d'air accueillant l'échangeur étant la veine de flux secondaire ;
- la paroi interne présente une surface interne et une surface externe, toutes deux au contact de l'air ;
- la paroi externe présente une surface interne au contact de l'air et une surface externe exempte de contact avec l'air ;
- la paroi externe présente une surface interne et la veine de circulation d'air est délimitée par un carter et par la surface interne de la paroi externe ;
- l'échangeur est partiellement enterré dans le carter. Ceci permet de limiter la surface frontale de l'échangeur et ainsi les perturbations de l'écoulement qui contourne l'échangeur. Aussi, ceci permet des surfaces d'échange plus grandes car pas limitée à la veine d'air ;
- au point axial où la hauteur radiale de l'enveloppe est maximale, au moins 5% de la hauteur de l'échangeur est enterré dans la veine, préférentiellement au moins 20% ;
- la direction principale d'écoulement du premier fluide dans l'échangeur est parallèle à l'axe de rotation de la turbomachine. Alternativement, ces directions peuvent être inclinées l'une par rapport à l'autre.

### Avantages apportés

L'invention permet d'augmenter l'échange de chaleur tout en limitant les pertes de charge de l'écoulement d'air. Dans le contexte d'un refroidisseur d'huile de turboréacteur, cette solution devient particulièrement pertinente puisque la source froide est à très basse température en plus d'être disponible en grande quantité vu le débit du flux secondaire.

La fabrication additive permet des conceptions plus complexes en maximisant le poids en amont pour rigidifier la structure et la protéger de tout élément étranger. Aussi, le poids total moindre par rapport aux échangeurs connus permet, à poussée équivalent, de réduire la consommation de carburant de la turbomachine.

### Brève description des dessins

La figure 1 représente une turbomachine selon l'invention ;
La figure 2 illustre une vue en plan d'un échangeur selon l'invention ;
La figure 3 représente une section de l'échangeur dans le plan III:III défini en figure 4 ;
La figure 4 montre une vue de dessus radiale de l'échangeur ;
La figure 5 illustre une vue de l'échangeur parallèle à l'axe de la turbomachine.

### Description des modes de réalisation

Dans la description qui va suivre, les termes « interne » et « externe » renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

Dans les modes de réalisation illustrés, l'échangeur est de forme courbée autour d'un axe qui coïncide avec l'axe de la turbomachine.

L'échangeur définit une direction principale d'écoulement de l'air, qui dans les modes de réalisations illustrés, est parallèle à l'axe de la turbomachine. Par abus de langage, la présente demande pourra utiliser le vocable de « direction axiale » pour désigner la direction d'écoulement du premier fluide.

Sauf indication contraire, la longueur est mesurée selon l'axe, la largeur est mesurée circonférentiellement et la hauteur est mesurée radialement.

L'épaisseur est la dimension la plus petite d'un élément caractérisant la distance entre deux de ses plus grandes surfaces.

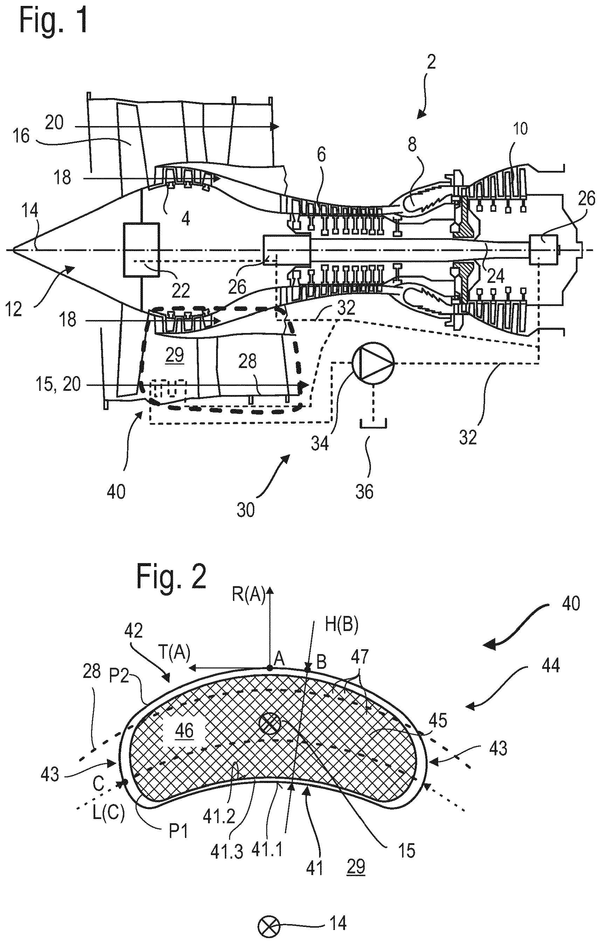

La figure 1 représente de manière simplifiée une turbomachine 2 qui dans ce cas précis est un turboréacteur avec un double-flux axial. Le turboréacteur 2 comprend un premier compresseur, basse-pression 4 et un deuxième compresseur, haute-pression 6, une chambre de combustion 8 et une ou plusieurs turbines 10. En fonctionnement, la puissance mécanique de la turbine 10 transmise au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion.

Le rotor 12 comprend un arbre de transmission 24 monté sur le carter au moyen de deux paliers 26.

Une surface de carter 28 délimite radialement extérieurement une veine 29 de circulation du flux secondaire 20.

Afin de lubrifier les éléments tournants du turboréacteur 2, un circuit de lubrification 30 est prévu. Ce circuit 30 comprend des conduits 32 pour transporter l'huile aux organes du turboréacteur 2 la nécessitant, comme notamment la boite d'engrenage 22 et les paliers 26. Le circuit 30 comprend à cette fin une pompe 34 pour mettre en mouvement l'huile dans le circuit 30 et un réservoir 36.

Un échangeur à chaleur 40 est prévu pour réguler la température de l'huile dans le circuit 30. L'échangeur 40 peut être positionné dans le flux secondaire 20 pour refroidir l'huile grâce l'air froid du flux secondaire. Une zone d'implantation en pointillés illustre le positionnement que peut prendre l'échangeur. Celui-ci peut être partiellement enterré dans le carter 28 ou au coeur de la veine 29. Alternativement, ou en complément, l'échangeur 40 peut aussi être prévu en aval des vannes de bleed, pour réchauffer les fluides grâce à l'air chaud.

Il est entendu que le circuit 30 comprend tous les organes permettant de contrôler la température, la pression et le débit de l'huile pour obtenir un fonctionnement optimal (capteurs, vannes, surpresseur, réducteur de débit, etc.).

Le réservoir 36 peut être fixé à la nacelle de la turbomachine 2 ou à un carter de compresseur. Le réservoir 36 peut être placé entre deux parois annulaires guidant des flux concentriques ; par exemple entre le flux secondaire 20 et le flux entourant la turbomachine 2, ou entre le flux primaire 18 et le flux secondaire 20.

La figure 2 montre une vue en plan d'un échangeur de chaleur 40 tel que celui représenté en figure 1, vu dans un plan perpendiculaire à l'axe 14 de la turbomachine 2. L'échangeur de chaleur 40 présente une forme générale arquée circonférentiellement. Il épouse sensiblement le carter annulaire 28 de la turbomachine. Il est traversé par l'air du flux secondaire 20 qui forme un premier fluide, et accueille de l'huile formant un deuxième fluide. Il comporte une paroi interne 41, une paroi externe 42 et optionnellement deux parois latérales 43. Les parois 41, 42, 43 forment ensemble une enveloppe 44 qui entoure un réseau d'ailettes 45.

Les parois interne 41 et externe 42 délimitent un canal 46 définissant la direction principale d'écoulement de l'air 15, qui dans cet exemple est parallèle à l'axe 14. Le canal 46 est occupé par les ailettes 45. Les ailettes 45 délimitent une multitude de couloirs 47 qui sont des subdivisions du canal 46.

La paroi interne 41 a une surface interne 41.1 et une surface externe 41.2. Ces deux surfaces 41.1, 41.2 sont au contact de l'air, l'une (41.1) au contact de l'air qui reste dans la veine de circulation 29 et l'autre (41.2) au contact de l'air qui entre dans et parcourt le canal 46.

La surface interne 41.1 est visible sur cette vue en plan car l'enveloppe 44 a une dimension qui varie le long de l'axe 14. Ces variations sont à la fois circonférentielles et radiales car on voit la surface externe 41.1 se prolonger sur les parois latérales 43 et sur la paroi externe 42.

En tout point de la paroi interne 41 ou externe 42, peuvent être définies une direction radiale et une direction circonférentielle. Par exemple, le point A sur la figure 2 est un point médian supérieur de l'échangeur. La direction radiale en ce point est notée R(A) et la direction circonférentielle est notée T(A).

La mention P illustre le profil de l'enveloppe en plusieurs positions axiales. Sur la figure 2 qui est une vue en plan, P1 désigne le profil le plus petit, par exemple au niveau amont, comportant le bord d'attaque 41.3 où se rejoignent surface externe 41.2 et surface interne 41.1. P2 désigne le profil le plus grand.

Pour chaque point de l'enveloppe 44 peut être définie une hauteur radiale de l'enveloppe (par exemple H(B) au point B) et une largeur circonférentielle (par exemple L(C) au point C). Soit un point B' (non représenté) axialement en aval du point B et un point C' (non représenté) axialement en aval du point C. Les variations de dimensions de l'échangeur 40 peuvent notamment être caractérisées par H(B)≠H(B') et L(C)≠L(C').

La figure 2 montre enfin en trait pointillé la surface interne du carter 28. On voit que l'échangeur 40 est partiellement enterré dans le carter 28. Ceci permet à l'échangeur 40 de ne pas être trop proéminant dans la veine 29 tout en permettant de grandes surfaces d'échange de chaleur.

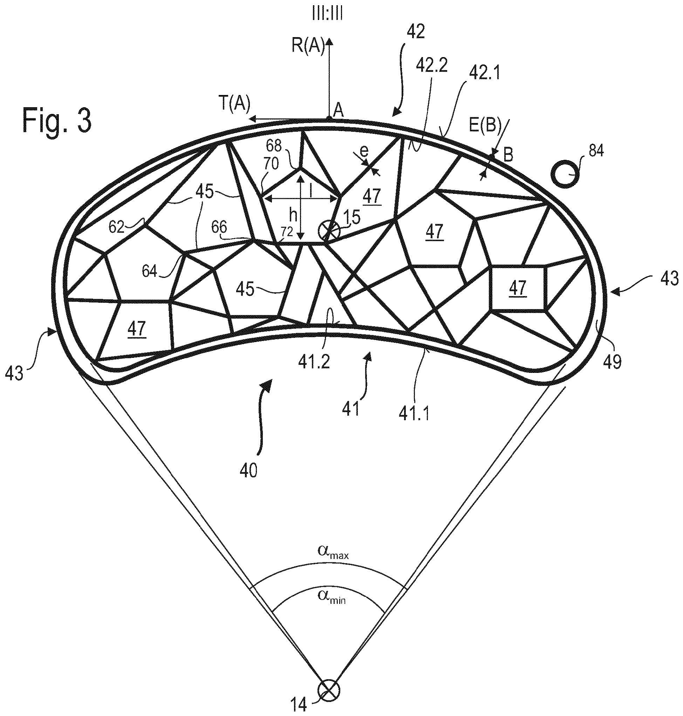

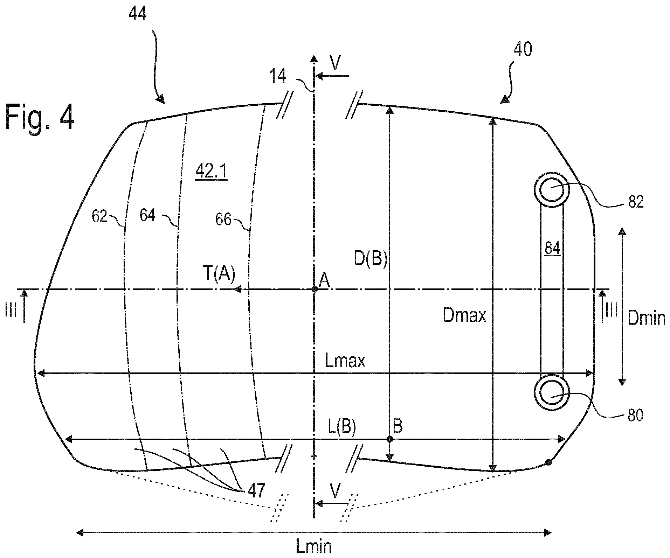

La figure 3 illustre une section agrandie de l'échangeur 40 dans le plan perpendiculaire à l'axe 14 et indiqué III:III sur la figure 4. Seuls quelques couloirs 47 sont représentés et les dimensions ne sont pas à l'échelle. Notamment l'épaisseur des parois 41, 42, 43 et les dimensions des couloirs 47 sont exagérés pour faciliter la compréhension du dessin. La figure 3 montre le point A, médian, similaire à la figure 2.

Les ailettes 45 forment dans cet exemple un treillis ou une multitude d'entrecroisements et délimitent les couloirs 47. La section des couloirs 47 peut avoir des formes variées, géométriques ou non, régulières ou non. Dans l'exemple illustré ici, les couloirs 47 ont tous une section polygonale.

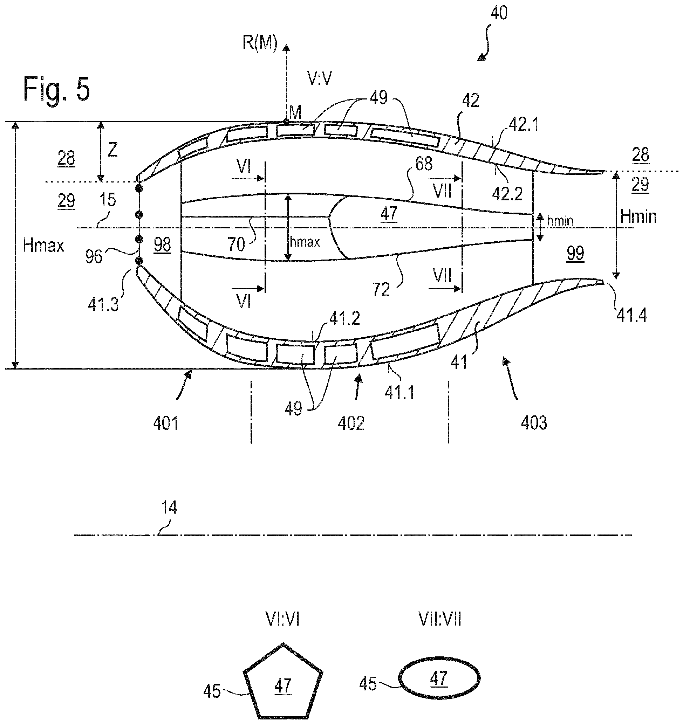

Dans un plan amont ou aval à celui de la coupe de la figure 3, les formes des mêmes couloirs peuvent être différentes, avec une évolution progressive. Ainsi, non seulement la dimension des couloirs peut évoluer, notamment en suivant l'évolution de l'enveloppe, mais la nature même de la forme des couloirs peut changer (ceci est illustré à la figure 5). Par « dimension des couloirs », on entend ici la largeur (la plus grande mesure circonférentielle) d'un couloir et la hauteur (la plus grande mesure radiale) d'un couloir.

A l'inverse, les couloirs 47 peuvent avoir un comportement contraire à celui de l'enveloppe : les couloirs peuvent rétrécir en section alors que la section de l'enveloppe augmente. Chaque couloir peut aussi avoir une tendance indépendante des autres couloirs.

L'enveloppe 44 comprends au moins un passage 49 aménagé dans les parois 41, 42, 43. Dans cet exemple, le passage 49 parcourt l'ensemble des parois 41, 42, 43 et permet ainsi la circulation du second fluide tout autour des ailettes 45.

L'ensemble des ailettes 45 et de l'enveloppe 44 sont monoblocs, réalisés par un procédé de fabrication additive, tel que ALM (additive layer manufacturing) à partir de poudre d'aluminium ou de titane, par exemple. Lors de la fabrication, l'épaisseur des couches peut être comprise entre 10 µm et 150 µm, ce qui permet d'atteindre une épaisseur pour les parois de l'échangeur comprises entre 0,3 mm et 4 mm. Les parois de l'enveloppe 44, qui doivent résister à l'ingestion d'objets et loger les passages 49 d'huile sont préférentiellement plus épaisses que les ailettes 45 dont la fonction est de conduire efficacement la chaleur.

L'épaisseur e des parois 45 ou l'épaisseur E de l'enveloppe 44 peuvent varier selon les trois dimensions de l'espace. Par exemple, lorsque l'enveloppe 44 et les couloirs 47 grandissent le long de l'axe 14, l'épaisseur des parois 41, 42, 43 et des ailettes 45 peut également augmenter. Alternativement, les épaisseurs e, E peuvent varier indépendamment des variations de l'enveloppe 44 ou des couloirs 45. Alternativement, les épaisseurs e, E peuvent être constantes.

La figure 3 montre également les angles αₘᵢₙ et αₘₐₓ balayés par l'enveloppe. L'angle αₘᵢₙ correspondant à la largeur circonférentielle la plus petite (notée Lmin sur la figure 4) et l'angle αₘₐₓ correspond à la largeur circonférentielle la plus grande (notée Lmax sur la figure 4). Le ratio αₘₐₓ/αₘᵢₙ peut être supérieur à 10%. Cette valeur caractérise circonférentiellement la divergence/convergence de l'échangeur. Cette différence d'angle permet de ralentir substantiellement le flux d'air suite à son entrée dans l'échangeur 40 et permet la gestion aérodynamique du premier fluide qui n'entre pas dans l'échangeur 40.

La figure 3 montre des points remarquables 62, 64, 66, 68, 70, 72 qui sont ici des arêtes de couloirs 47.

Le passage 49 permet au second fluide de circuler entre un collecteur d'entrée (noté 80 sur la figure 4) et un collecteur de sortie (noté 82 sur la figure 4). Les collecteurs d'entrée et de sortie sont préférentiellement monobloc avec l'échangeur 40 et communiquent avec le passage 49. Comme il est visible sur la figure 4, les collecteurs sont avantageusement circonférentiellement alignés.

Un by-pass 84 reliant les collecteurs peut être aménagé dans l'échangeur 40. Celui-ci apparaît détaché de l'échangeur du fait que la figure 3 est une section ne faisant pas apparaître les éléments en arrière-plan. Le by-pass 84 permet, sous l'action d'obturateurs ou de vannes (non représentés), de shunter le passage 49 et de faire passer le second fluide directement du collecteur d'entrée au collecteur de sortie.

En références aux figures 3 et 4, les collecteurs d'entrée et de sortie 80, 82 peuvent être formés par des bossages radialement extérieur à l'enveloppe 44. Le by-pass 84 peut être tubulaire et parallèle à la direction axiale.

La figure 4 illustre une vue en plan perpendiculaire à la direction R(A) de la figure 3, vue radialement depuis l'extérieur de l'échangeur 40. La représentation de l'enveloppe 44 est ici aplanie et tronquée en son centre. L'amont est en bas de la figure 4.

Cette vue illustre l'enveloppe 44 et en particulier sa dimension axiale (notée D(B) au point B), qui varie circonférentiellement entre Dmin à ses extrémités circonférentielles et Dmax. De même, cette figure montre les variations de la largeur circonférentielle de l'échangeur (notée L(B) au point B), entre une valeur minimale (Lmin) et une valeur maximale (Lmax). Cette largeur est une dimension curviligne dans l'espace.

On observe que pour permettre une meilleure pénétration de l'air dans l'échangeur, l'enveloppe peut être profilée à l'amont. En pointillés en bas de la figure 4 est illustrée une alternative pour le bord amont de l'enveloppe 44 montrant une largeur circonférentielle quasi nulle en amont de l'échangeur 40 puis qui grandit rapidement d'amont vers l'aval.

Les arêtes des couloirs 62, 64, 66 sont ici représentées en traits mixtes pour illustrer les dimensions des couloirs 47 qui ne sont pas rectilignes ou parallèles à l'axe 14. On observe que dans l'exemple illustré, les tendances à l'augmentation ou diminution de l'enveloppe 44 sont respectées par les couloirs 47.

La figure 5 illustre schématiquement et dans un plan comprenant l'axe 14, un échangeur 40 comme illustré précédemment. Les échelles ne sont pas respectées afin de faciliter la compréhension de la figure.

L'échangeur est ici subdivisé en trois tiers : un tiers amont 401, un tiers central 402 et un tiers aval 403.

Une grille 96 de protection vise à protéger les ailettes 45. Cette grille 96 peut être monobloc avec l'enveloppe 44 et les ailettes 45.

Une chambre de ralentissement 98 et une chambre d'accélération 99 peuvent être prévues pour ralentir puis accélérer le flux d'air. Ces chambres 98, 99 peuvent prendre la forme d'une tuyère de section variable.

La figure 5 montre également les lignes 68, 70 et 72 identifiées sur la figure 3. On observe que la hauteur (radiale) du couloir 47 varie le long de l'axe entre une valeur hmax et une valeur hmin. Dans ce cas, les variations de hauteur du couloir 45 suivent la tendance des variations de l'enveloppe 44, c'est-à-dire une augmentation au moins dans le tiers amont 401, puis une diminution au moins dans le tiers aval 403. Ceci permet d'obtenir les mêmes effets pour l'air qui passe dans l'échangeur 40 que pour l'air qui le contourne, en ayant les mêmes effets produits par les ailettes 45 que par l'enveloppe 44 : ralentissement améliorant l'échange thermique puis accélération pour l'insertion dans la veine.

Si les variations de l'enveloppe 44 et des couloirs 47 sont illustrées ici comme augmentant puis diminuant, d'amont vers l'aval, l'homme du métier comprendra que diverses alternatives sont possibles, notamment une décroissance suivie d'une croissance ou des variations plus complexes avec des points d'inflexion. Ces alternatives ne font partie de l'objet revendiqué par aucune des revendications ci-jointes.

En amont et en aval de l'enveloppe 44, la surface externe 41.2 et la surface interne 41.1 de la paroi interne 41 se rejoignent. Cette jointure peut être aménagée pour minimiser les pertes de charge, par exemple avec un bord d'attaque 41.3 et un bord de fuite 41.4, à l'aune d'une aube ou d'une aile. La jointure protège également les passages 49 au coeur des parois 41, 42. Ainsi, l'air qui contourne l'échangeur 40 et demeure dans la veine 29 va être guidé par la surface interne 41.1 et l'air qui rentre dans l'échangeur 40 sera guidé par la surface externe 41.2. Ces deux flux se rejoignant en sortie de l'échangeur avec le moins de remous possible grâce à la présence d'un bord de fuite 41.4 adapté.

De même, les ailettes 45 se rejoignent en amont et en aval de l'échangeur et peuvent donc être aménagée avec un bord d'attaque et un bord de fuite (non représentés).

Dans les parois interne 41 et externe 42 sont aménagés les passages 49 pour le second fluide. Ces passages peuvent former des circuits dans un plan perpendiculaire à l'axe 14. Alternativement ou en complément, ils peuvent former des serpentins ou des hélices pour propager le second fluide du collecteur d'entrée 80 vers le collecteur de sortie 82.

Les sections VI et VII du couloir 47 matérialisent le changement de nature que les couloirs 47 peuvent avoir, dans ce cas un pentagone dans le plan VI qui devient une ellipse dans le plan VII.

La figure 5 illustre enfin la paroi du carter 28 et montre que l'échangeur 40 peut être enterré dans le carter 28 d'une profondeur Z. Le ratio Z/Hmax peut être supérieur à 20%. Selon cet exemple, la surface externe 42.1 de la paroi externe 42 n'est pas au contact de l'air.

Alternativement ou en complément, l'échangeur 40 peut être enterré dans un carter intérieur, sa surface interne 41.1 n'étant donc pas au contact de l'air.

L'échangeur de chaleur selon l'invention est préférentiellement destiné à échanger de la chaleur entre de l'air et de l'huile mais ne se limite pas à cette utilisation.

D'autre part, si dans les modes de réalisations illustrés, la direction principale d'écoulement de l'air 15 est parallèle à l'axe 14 de la turbomachine 2, il peut en être autrement et la courbure des parois 41, 42 de l'échangeur peut être telle que la direction principale d'écoulement de l'air 15 soit inclinée par rapport à l'axe 14, le flux d'air étant donc généralement conique, par opposition à un flux cylindrique dans les exemples illustrés ci-dessus.

Alternativement ou en complément, l'échangeur 40 peut être enterré dans un carter intérieur, sa surface interne 41.1 n'étant donc pas au contact de l'air.

L'échangeur de chaleur selon l'invention est préférentiellement destiné à échanger de la chaleur entre de l'air et de l'huile mais ne se limite pas à cette utilisation.

D'autre part, si dans les modes de réalisations illustrés, la direction principale d'écoulement de l'air 15 est parallèle à l'axe 14 de la turbomachine 2, il peut en être autrement et la courbure des parois 41, 42 de l'échangeur peut être telle que la direction principale d'écoulement de l'air 15 soit inclinée par rapport à l'axe 14, le flux d'air étant donc généralement conique, par opposition à un flux cylindrique dans les exemples illustrés ci-dessus.

## Revendications

1. Échangeur de chaleur (40) de turbomachine (2) pour échanger de la chaleur entre un premier fluide et un second fluide, l'échangeur comprenant un réseau d'ailettes (45) délimitant des couloirs (47) et une enveloppe (44) comprenant une paroi interne (41) et une paroi externe (42), les parois (41, 42) délimitant entre elles un canal (46) pour l'écoulement du premier fluide selon une direction principale d'écoulement (15), le réseau d'ailettes (45) étant agencé dans le canal (46) et relié aux parois (41, 42), l'échangeur étant **caractérisé en ce qu'**il comprend au moins un passage (49) pour l'écoulement du second fluide, le passage (49) étant noyé dans au moins l'une des parois (41, 42), le canal (46) étant, selon la direction principale d'écoulement (15), et y compris au droit des ailettes (45) et du passage (49), divergent puis convergent.

2. Échangeur de chaleur (40) selon la revendication 1, **caractérisé en ce que** l'enveloppe (44) comporte deux parois latérales (43) reliant la paroi interne (41) à la paroi externe (42).

3. Échangeur de chaleur (40) selon l'une des revendications précédentes, **caractérisé en ce que** le réseau d'ailettes (45) est circonscrit radialement intérieurement et extérieurement, et circonférentiellement par l'enveloppe (44).

4. Échangeur de chaleur (40) selon l'une des revendications précédentes, **caractérisé en ce que** les parois interne (41) et externe (42) sont arquées, vu dans un plan perpendiculaire à la direction principale d'écoulement (15), **en ce que** l'enveloppe (44) présente une hauteur radiale (H) entre la paroi interne (41) et la paroi externe (42), la hauteur radiale (H) définissant une direction radiale (R) perpendiculaire à la direction principale d'écoulement (15), la hauteur radiale (H) de l'enveloppe (44) étant variable le long de la direction principale d'écoulement (15), et **en ce que** l'enveloppe (44) présente une largeur circonférentielle (L) entre les parois latérales (43) définissant une direction circonférentielle (T) perpendiculaire à la direction radiale (R) et à la direction principale d'écoulement (15), la largeur circonférentielle (L) étant variable le long de la direction principale d'écoulement (15).

5. Échangeur de chaleur (40) selon l'une des revendications précédentes, **caractérisé en ce que** la hauteur (H) de l'enveloppe (44) et/ou la largeur (L) de l'enveloppe (44) augmentent dans au moins un tiers amont (401) de l'enveloppe (44).

6. Échangeur de chaleur (40) selon l'une des revendications précédentes, **caractérisé en ce que** la hauteur (H) de l'enveloppe (44) et/ou la largeur (L) de l'enveloppe (44) diminuent dans au moins un tiers aval (403) de l'enveloppe (44).

7. Échangeur de chaleur (40) selon l'une des revendications précédentes, **caractérisé en ce que** l'au moins un passage (49) s'étend dans la paroi interne (41) et dans la paroi externe (42), ainsi qu'éventuellement dans l'une au moins des parois latérales (43).

8. Échangeur de chaleur (40) selon l'une des revendications précédentes, **caractérisé en ce que** l'au moins un passage (49) s'étend dans un plan perpendiculaire à la direction principale d'écoulement du premier fluide (15).

9. Échangeur de chaleur (40) selon l'une des revendications précédentes, **caractérisé en ce qu'**au moins l'une des parois (41) présente une surface interne (41.1) et une surface externe (41.2), toutes deux au contact du premier fluide.

10. Échangeur de chaleur (40) selon l'une des revendications précédentes, **caractérisé en ce qu'**au moins l'une des parois (41) présente une surface interne (41.1) et une surface externe (41.2), jointes entre elles en amont par un bord d'attaque (41.3) et en aval par un bord de fuite (41.4).

11. Échangeur de chaleur (40) selon l'une des revendications précédentes, **caractérisé en ce que** la longueur axiale (D) de l'enveloppe (44) varie circonférentiellement entre une valeur minimale (Dmin) et une valeur maximale (Dmax), ces deux valeurs étant comprises entre 100 et 150 mm.

12. Échangeur de chaleur (40) selon l'une des revendications précédentes, **caractérisé en ce que**, la divergence et la convergence du canal (46) comprennent des variations de la largeur circonférentielle (L) de l'enveloppe (44), axialement, entre une valeur minimale (Lmin) et une valeur maximale (Lmax) ces deux valeurs étant préférablement distinctes d'au moins 10%.

13. Échangeur de chaleur (40) selon l'une des revendications précédentes, **caractérisé en ce que** la hauteur radiale (h) respective de chacun des couloirs (47) varie le long de la direction principale d'écoulement du premier fluide (15) selon la même tendance que la hauteur radiale (H) de l'enveloppe (44).

14. Échangeur de chaleur (40) selon l'une des revendications précédentes, **caractérisé en ce que** la largeur circonférentielle (I) respective de chacun des couloirs (47) varie le long de la direction principale d'écoulement du premier fluide (15) selon la même tendance que la largeur (L) de l'enveloppe (44).

15. Échangeur de chaleur (40) selon l'une des revendications précédentes, **caractérisé en ce que** les couloirs (47) s'étendent parallèlement à la direction principale d'écoulement du premier fluide (15).

16. Échangeur de chaleur (40) selon l'une des revendications précédentes, **caractérisé en ce que** les ailettes (45) s'étendent perpendiculairement aux parois interne (41) et externe (42), vu dans un plan perpendiculaire à la direction principale d'écoulement du premier fluide (15).

17. Échangeur de chaleur (40) selon l'une des revendications 1 à 15, **caractérisé en ce que** les ailettes (45) forment, vu dans un plan perpendiculaire à la direction principale d'écoulement du premier fluide (15), des motifs géométriques réguliers ou irréguliers, tels qu'un nid d'abeille, des polygones, des ellipses, les ailettes (45) étant droites ou courbées, ou toute combinaison hétérogène de ces motifs.

18. Échangeur de chaleur (40) selon la revendication précédente, **caractérisé en ce qu'**un même couloir (47) décrit au moins deux motifs de nature différente dans deux plans différents perpendiculaires à la direction principale d'écoulement du premier fluide (15), notamment un polygone et une ellipse.

19. Échangeur de chaleur (40) selon l'une des revendications précédentes, **caractérisé en ce que** l'épaisseur (e) des ailettes varie le long de la direction principale d'écoulement du premier fluide (15), l'épaisseur (e) étant préférentiellement plus faible au moins dans le tiers aval (423) de l'échangeur (42).

20. Échangeur de chaleur (40) selon l'une des revendications précédentes, **caractérisé en ce que** la rugosité de la surface des ailettes (45) et des parois varie le long de la direction principale d'écoulement du premier fluide (15), la rugosité diminuant préférentiellement au moins dans le tiers aval (423) de l'échangeur (42).

21. Échangeur de chaleur (40) selon l'une des revendications précédentes, **caractérisé en ce que** l'enveloppe (44) et les ailettes (45) sont monoblocs, réalisés par fabrication additive.

22. Échangeur de chaleur (40) selon l'une des revendications précédentes, **caractérisé en ce que** l'échangeur (40) est réalisé en alliage métallique, préférentiellement à base d'aluminium.

23. Échangeur de chaleur (40) selon l'une des revendications précédentes, **caractérisé en ce qu'**il comprend une grille (96) de protection en amont du réseau d'ailettes (45) et en amont de l'au moins un passage (49) du second fluide, la grille (96) étant monobloc avec l'enveloppe (44) et les ailettes (45).

24. Échangeur de chaleur (40) selon l'une des revendications précédentes, **caractérisé par** une chambre de ralentissement (98) en amont des ailettes (45) et éventuellement en aval de la grille (96) de protection.

25. Échangeur de chaleur (40) selon l'une des revendications précédentes, **caractérisé par** une chambre d'accélération (99) en aval des ailettes (45).

26. Turbomachine (2) comprenant un carter (28) délimitant une veine (29) de circulation d'air et un échangeur de chaleur (40) agencé dans la veine (29), **caractérisée en ce que** l'échangeur (40) est selon l'une des revendications 1 à 25, le premier fluide étant l'air circulant dans la veine (29).

27. Turbomachine (2) selon la revendication 26, **caractérisée en ce qu'**elle est une turbomachine (2) à double flux, comprenant une veine de flux primaire (18) et une veine de flux secondaire (20), la veine de circulation d'air (29) accueillant l'échangeur (40) étant la veine de flux secondaire.

28. Turbomachine (2) selon la revendication 26 ou 27, **caractérisée en ce que** la paroi interne (41) présente une surface interne (41.1) et une surface externe (41.2), toutes deux au contact de l'air.

29. Turbomachine (2) selon l'une des revendications 26 à 28, **caractérisée en ce que** la paroi externe (42) présente une surface interne (42.2) au contact de l'air et une surface externe (42.1) exempte de contact avec l'air.

30. Turbomachine (2) selon l'une des revendications 26 à 29, **caractérisée en ce que** la paroi externe (42) présente une surface interne (42.2) et la veine de circulation d'air (29) est délimitée par un carter (28) et par la surface interne (42.2) de la paroi externe (42).

31. Turbomachine (2) selon l'une des revendications 26 à 30, **caractérisée en ce que** l'échangeur (40) est partiellement enterré dans le carter (28).

32. Turbomachine (2) selon la revendication 31, **caractérisée en ce qu'**au point axial (M) où la hauteur radiale (H) de l'enveloppe (44) est maximale (Hmax), au moins 5% de la hauteur (H) de l'échangeur (42) est enterré dans la veine (29), préférentiellement au moins 20%.

33. Turbomachine (2) selon l'une des revendications 26 à 32, **caractérisée en ce que** la direction principale d'écoulement du premier fluide (15) dans l'échangeur (40) est parallèle à l'axe (14) de rotation de la turbomachine (2).

## Patentansprüche

1. Ein Wärmetauscher (40) für eine Turbomaschine (2), der den Wärmeaustausch zwischen einem ersten Fluid und einem zweiten Fluid gewährleistet, wobei der Wärmetauscher ein Rippengitter (45), das Bahnen (47) definiert, und ein Gehäuse (44) umfasst, das mit einer Innenwand (41) und einer Außenwand (42) versehen ist, wobei die Wände (41, 42) zwischen sich einen Kanal (46) für den Fluss des ersten Fluids in einer Hauptflussrichtung (15) definieren, die Anordnung der Rippen (45) in dem Kanal (46) angeordnet ist und von den Wänden (41, 42) eingespannt wird, wobei der Wärmetauscher **dadurch gekennzeichnet ist, dass** er mindestens einen Durchgang (49) für die Strömung des zweiten Fluids aufweist, wobei der Durchgang (49) in mindestens eine der Wände (41, 42) eingebettet ist, wobei der Kanal (46) in der Hauptströmungsrichtung (15) auseinanderläuft und dann zusammenläuft, einschließlich an den Rippen (45) und dem Durchgang (49).

2. Der Wärmetauscher (40) nach Anspruch 1, **dadurch gekennzeichnet, dass** das Gehäuse (44) zwei Seitenwände (43) aufweist, die die Innenwand (41) mit der Außenwand (42) verbinden.

3. Der Wärmetauscher (40) nach einem der vorhergehenden Ansprüche, **dadurch gekennzeichnet, dass** die Rippen (45) radial nach innen und außen und in Umfangsrichtung des Gehäuses (44) umschrieben sind.

4. Der Wärmetauscher (40) nach einem der vorhergehenden Ansprüche, **dadurch gekennzeichnet, dass** die Innenwand (41) und die Außenwand (42) in einer Ebene senkrecht zur Hauptströmungsrichtung (15) gesehen bogenförmig sind, dass das Gehäuse (44) eine radiale Höhe (H) zwischen der Innenwand (41) und der Außenwand (42) aufweist, wobei die radiale Höhe (H) eine radiale Richtung (R) senkrecht zur Hauptströmungsrichtung (15) definiert, wobei die radiale Höhe (H) des Gehäuses (44) entlang der Hauptströmungsrichtung (15) variabel ist, und dass das Gehäuse (44) eine Umfangsbreite (L) zwischen den Seitenwänden (43) aufweist, die eine Umfangsrichtung (T) senkrecht zur radialen Richtung (R) und zur Hauptströmungsrichtung (15) definiert, wobei die Umfangsbreite (L) entlang der Hauptströmungsrichtung (15) variabel ist.

5. Der Wärmetauscher (40) nach einem der vorhergehenden Ansprüche, **dadurch gekennzeichnet, dass** die Höhe (H) des Gehäuses (44) und/oder die Breite (L) des Gehäuses (44) in mindestens einem Drittel stromaufwärts (401) des Gehäuses (44) zunimmt.

6. Der Wärmetauscher (40) nach einem der vorhergehenden Ansprüche, **dadurch gekennzeichnet, dass** die Höhe (H) des Gehäuses (44) und/oder die Breite (L) des Gehäuses (44) in mindestens einem Drittel stromabwärts (403) des Gehäuses (44) abnimmt.

7. Der Wärmetauscher (40) nach einem der vorhergehenden Ansprüche, **dadurch gekennzeichnet, dass** sich mindestens ein Durchgang (49) in die Innenwand (41) und in die Außenwand (42) sowie möglicherweise in mindestens eine der Seitenwände (43) erstreckt.

8. Der Wärmetauscher (40) nach einem der vorhergehenden Ansprüche, **dadurch gekennzeichnet, dass** der mindestens eine Durchgang (49) in einer Ebene verläuft, die senkrecht zur Hauptströmungsrichtung des ersten Fluids (15) steht.

9. Der Wärmetauscher (40) nach einem der vorhergehenden Ansprüche, **dadurch gekennzeichnet, dass** mindestens eine der Wände (41) eine Innenfläche (41.1) und eine Außenfläche (41.2) aufweist, die beide mit dem ersten Fluid in Kontakt stehen.

10. Der Wärmetauscher (40) nach einem der vorhergehenden Ansprüche, **dadurch gekennzeichnet, dass** mindestens eine der Wände (41) eine Innenfläche (41.1) und eine Außenfläche (41.2) aufweist, die stromaufwärts durch eine Vorderkante (41.3) und stromabwärts durch eine Hinterkante (41.4) miteinander verbunden sind.

11. Der Wärmetauscher (40) nach einem der vorhergehenden Ansprüche, **dadurch gekennzeichnet, dass** die axiale Länge (D) des Gehäuses (44) in Umfangsrichtung zwischen einem Mindestwert (Dmin) und einem Höchstwert (Dmax) variiert, wobei diese beiden Werte zwischen 100 und 150 mm liegen.

12. Der Wärmetauscher (40) nach einem der vorhergehenden Ansprüche, **dadurch gekennzeichnet, dass** die Abweichung und die Annäherung des Kanals (46) Änderungen der Umfangsbreite (L) des Gehäuses (44) in axialer Richtung zwischen einem Minimalwert (Lmin) und einem Maximalwert (Lmax) umfassen, wobei sich diese beiden Werte vorzugsweise um mindestens 10% unterscheiden.

13. Der Wärmetauscher (40) nach einem der vorhergehenden Ansprüche, **dadurch gekennzeichnet, dass** die jeweilige radiale Höhe (h) jeder der Bahnen (47) entlang der Hauptströmungsrichtung des ersten Fluids (15) mit der gleichen Ausrichtung wie die radiale Höhe (H) des Gehäuses (44) variiert.

14. Der Wärmetauscher (40) nach einem der vorhergehenden Ansprüche, **dadurch gekennzeichnet, dass** die jeweilige Umfangsbreite (I) jeder der Bahnen (47) entlang der Hauptströmungsrichtung des ersten Fluids (15) mit der gleichen Ausrichtung wie die Breite (L) des Gehäuses (44) variiert.

15. Der Wärmetauscher (40) nach einem der vorhergehenden Ansprüche, **dadurch gekennzeichnet, dass** die Bahnen (47) parallel zur Hauptströmungsrichtung des ersten Fluids (15) verlaufen.

16. Der Wärmetauscher (40) nach einem der vorhergehenden Ansprüche, **dadurch gekennzeichnet, dass** die Rippen (45) senkrecht zur Innenwand (41) und zur Außenwand (42) verlaufen, gesehen in einer Ebene senkrecht zur Hauptströmungsrichtung des ersten Fluids (15).

17. Der Wärmetauscher (40) nach einem der Ansprüche 1 bis 15, **dadurch gekennzeichnet, dass** die Rippen (45) in einer Ebene senkrecht zur Hauptströmungsrichtung des ersten Fluids (15) gesehen regelmäßige oder unregelmäßige geometrische Muster bilden, wie z.B. eine Bienenwabe, Polygone, Ellipsen, wobei die Rippen (45) gerade oder gekrümmt sind, oder eine beliebige heterogene Kombination dieser Muster bilden.

18. Der Wärmetauscher (40) nach dem vorhergehenden Anspruch, **dadurch gekennzeichnet, dass** dieselbe Bahn (47) mindestens zwei verschiedene Muster in zwei verschiedenen Ebenen senkrecht zur Hauptströmungsrichtung des ersten Fluids (15) beschreibt, insbesondere ein Vieleck und eine Ellipse.

19. Der Wärmetauscher (40) nach einem der vorhergehenden Ansprüche, **dadurch gekennzeichnet, dass** die Dicke (g) der Lamellen entlang der Hauptströmungsrichtung des ersten Fluids (15) variiert, wobei die Dicke (g) vorzugsweise zumindest im stromabwärtigen Drittel (423) des Tauschers (42) kleiner ist.

20. Der Wärmetauscher (40) nach einem der vorhergehenden Ansprüche, **dadurch gekennzeichnet, dass** die Oberflächenrauhigkeit der Rippen (45) und der Wände entlang der Hauptströmungsrichtung des ersten Fluids (15) variiert, wobei die Rauhigkeit vorzugsweise zumindest im stromabwärts gelegenen Drittel (423) des Wärmetauschers (42) abnimmt.

21. Der Wärmetauscher (40) nach einem der vorhergehenden Ansprüche, **dadurch gekennzeichnet, dass** das Gehäuse (44) und die Rippen (45) in einem Stück durch additive Fertigung hergestellt sind.

22. Der Wärmetauscher (40) nach einem der vorangehenden Ansprüche, **dadurch gekennzeichnet, dass** der Wärmetauscher (40) aus einer Metalllegierung, vorzugsweise auf Aluminiumbasis, hergestellt ist.

23. Der Wärmetauscher (40) nach einem der vorhergehenden Ansprüche, **dadurch gekennzeichnet, dass** er mit einem Schutzgitter (96) versehen ist, das sich stromaufwärts des Rippengitters (45) und stromaufwärts von mindestens einem Durchgang (49) für das zweite Fluid befindet, wobei das Gitter (96) aus einem Stück mit dem Gehäuse (44) und den Rippen (45) besteht.

24. Der Wärmetauscher (40) nach einem der vorhergehenden Ansprüche, **gekennzeichnet durch** eine Verzögerungskammer (98) stromaufwärts der Rippen (45) und möglicherweise stromabwärts des Schutzgitters (96).

25. Der Wärmetauscher (40) nach einem der vorangehenden Ansprüche, **gekennzeichnet durch** eine Beschleunigungskammer (99) stromabwärts der Rippen (45).

26. Dere Turbomaschine (2) mit einem Gehäuse (28), das einen Luftzirkulationskanal (29) begrenzt, und einem Wärmetauscher (40), der in dem Kanal (29) angeordnet ist, **dadurch gekennzeichnet, dass** der Wärmetauscher (40) einem der Ansprüche 1 bis 25 entspricht, wobei das erste Fluid Luft ist, die durch den Kanal (29) zirkuliert.

27. Eine Turbomaschine (2) nach Anspruch 26, **dadurch gekennzeichnet, dass** es sich um eine Zweistrom-Turbomaschine (2) handelt, die einen primären Strömungskanal (18) und einen sekundären Strömungskanal (20) umfasst, wobei der Luftströmungskanal (29), in dem der Wärmetauscher (40) angeordnet ist, der sekundäre Strömungskanal ist.

28. Die Turbomaschine (2) nach Anspruch 26 oder 27, **dadurch gekennzeichnet, dass** die Innenwand (41) eine Innenfläche (41.1) und eine Außenfläche (41.2) aufweist, die beide in Kontakt mit Luft stehen.

29. Die Turbomaschine (2) nach einem der Ansprüche 26 bis 28, **dadurch gekennzeichnet, dass** die Außenwand (42) eine Innenfläche (42.2) in Kontakt mit Luft und eine Außenfläche (42.1) nicht in Kontakt mit Luft aufweist.

30. Die Turbomaschine (2) nach einem der Ansprüche 26 bis 29, **dadurch gekennzeichnet, dass** die Außenwand (42) eine Innenfläche (42.2) aufweist und der Luftzirkulationskanal (29) durch ein Gehäuse (28) und die Innenfläche (42.2) der Außenwand (42) begrenzt ist.

31. Die Turbomaschine (2) nach einem der Ansprüche 26 bis 30, **dadurch gekennzeichnet, dass** der Wärmetauscher (40) teilweise in dem Gehäuse (28) versenkt ist.

32. Die Turbomaschine (2) nach Anspruch 31, **dadurch gekennzeichnet, dass** an dem axialen Punkt (M), an dem die radiale Höhe (H) des Gehäuses (44) am größten ist (Hmax), mindestens 5% der Höhe (H) des Wärmetauschers (42) in der Leitung (29) versenkt ist, vorzugsweise mindestens 20%.

33. Die Turbomaschine (2) nach einem der Ansprüche 26 bis 32, **dadurch gekennzeichnet, dass** die Hauptströmungsrichtung des ersten Fluids (15) im Wärmetauscher (40) parallel zur Drehachse (14) der Turbomaschine (2) verläuft.

## Claims

1. Heat exchanger (40) of a turbomachine (2) for exchanging heat between a first fluid and a second fluid, the heat exchanger comprising fins arranged as a network (45) and delimiting corridors (47), and an envelope (44) comprising an internal wall (41) and an external wall (42), the internal and external walls (41, 42) delimiting between them a channel (46) for a flow of the first fluid in a main flow direction (15), the network of fins (45) being arranged in the channel (46) and connected to the internal and external walls (41, 42), the heat exchange being **characterized in that** it comprises at least one passage (49) for a flow of the second fluid, the passage (49) being embedded in at least one of the internal and external walls (41, 42), the channel (46) being, in the main flow direction (15), and including at the level of the fins (45), divergent and then convergent.

2. Heat exchanger (40) according to claim 1, **characterized in that** the envelope (44) has two side walls (43) connecting the internal wall (41) to the external wall (42).

3. Heat exchanger (40) according to one of the preceding claims, **characterized in that** the network of fins (45) is circumscribed radially internally and externally, and circumferentially by the envelope (44).

4. Heat exchanger (40) according to one of the preceding claims, **characterized in that** the internal and external walls (41, 42) are arched, seen in a plane perpendicular to the main flow direction (15), **in that** the envelope (44) has a radial height (H) between the internal wall (41) and the external wall (42), the radial height (H) defining a radial direction (R) perpendicular to the main flow direction (15), the radial height (H) of the envelope (44) being variable along the main flow direction (15), and **in that** the envelope (44) has a circumferential width (L) between the side walls (43) defining a circumferential direction (T) perpendicular to the radial direction (R) and to the main flow direction (15), the circumferential width (L) being variable along the main flow direction (15).

5. Heat exchanger (40) according to one of the preceding claims, **characterized in that** the height (H) of the envelope (44) and/or the width (L) of the envelope (44) increase in at least an upstream third (401) of the envelope (44).

6. Heat exchanger (40) according to one of the preceding claims, **characterized in that** the height (H) of the envelope (44) and/or the width (L) of the envelope (44) decreases in at least a downstream third (403) of the envelope (44).

7. Heat exchanger (40) according to one of the preceding claims, **characterized in that** the at least one passage (49) extends in the internal wall (41) and in the external wall (42), as well as optionally in at least one of the side walls (43).

8. Heat exchanger (40) according to one of the preceding claims, **characterized in that** the at least one passage (49) extends in a plane that is perpendicular to the main flow direction (15).

9. Heat exchanger (40) according to one of the preceding claims, **characterized in that** at least one of the walls (41) has an internal surface (41.1) and an external surface (41.2), wherein both internal and external surfaces (41.1, 41.2) contact the first fluid.

10. Heat exchanger (40) according to one of the preceding claims, **characterized in that** at least one of the walls (41) has an internal surface (41.1) and an external surface (41.2) joined together upstream by a leading edge (41.3) and downstream by a trailing edge (41.4).

11. Heat exchanger (40) according to one of the preceding claims, **characterized in that** the axial length (D) of the envelope (44) varies circumferentially between a minimum value (Dmin) and a maximum value (Dmax), these two values being comprised between 100 and 150 mm.

12. Heat exchanger (40) according to one of the preceding claims, **characterized in that** the divergence and the convergence of the channel (46) comprises variations of the circumferential width (L) of the envelope (44), axially, between a minimum value (Lmin) and a maximum value (Lmax), these two values being distinct from one another by at least 10%.

13. Heat exchanger (40) according to one of the preceding claims, **characterized in that** respective radial height (h) of each of the corridors (47) varies along the main flow direction (15) of the first fluid according to a similar trend as the radial height (H) of the envelope (44).

14. Heat exchanger (40) according to one of the preceding claims, **characterized in that** the respective circumferential width (I) of each of the corridors (47) varies along the main flow direction (15) of the first fluid according to the same trend as the width (L) of the envelope (44).

15. Heat exchanger (40) according to one of the preceding claims, **characterized in that** the corridors (47) extend parallel to the main flow direction (15) of the first fluid.

16. Heat exchanger (40) according to one of the preceding claims, **characterized in that** the fins (45) extend perpendicularly to the internal and external walls (41, 42), seen in a plane perpendicular to the main flow direction (15) of the first fluid.

17. Heat exchanger (40) according to one of the preceding claims, **characterized in that** the fins (45) form patterns, seen in a plane perpendicular to the main flow direction (15) of the first fluid, such as a honeycomb, polygons, ellipses, or any heterogeneous combination thereof.

18. Heat exchanger (40) according to the preceding claim, **characterized in that** a same corridor (47) exhibits at least two patterns of different kind in two different planes perpendicular to the main flow direction (15) of the first fluid, the inter alia a polygon and an ellipse.

19. Heat exchanger (40) according to one of the preceding claims, **characterized in that** the thickness (e) of the fins varies along the main flow direction (15) of the first fluid, the thickness (e) being preferably smaller at least in a downstream third (423) of the exchanger (42).

20. Heat exchanger (40) according to one of the preceding claims, **characterized in that** the roughness of the surface of the fins (45) and of the walls varies along the main flow direction (15) of the first fluid, the roughness preferably decreasing at least in a downstream third (423) of the exchanger (42).

21. Heat exchanger (40) according to one of the preceding claims, **characterized in that** the envelope (44) and the fins (45) are integrally made and are produced by additive manufacturing technology.

22. Heat exchanger (40) according to one of the preceding claims, **characterized in that** the heat exchanger (40) is made of metal alloy, preferably from aluminium.

23. Heat exchanger (40) according to one of the preceding claims, **characterized in that** it further comprises a grid (96) for protecting the network of fins (45) upstream and downstream of the at least one passage (49) of the second fluid, the grid (96) being made in one piece with the envelope (44) and the fins (45).

24. Heat exchanger (40) according to one of the preceding claims, **characterized by** a retarding chamber (98) arranged upstream of the fins (45) and preferably upstream of the protecting grid (96).

25. Heat exchanger (40) according to one of the preceding claims, **characterized by** an acceleration chamber (99) arranged downstream of the fins (45).

26. Turbomachine (2) comprising a casing (28) delimiting a path (29) for an air flow and a heat exchanger (40) arranged in the path (29), **characterized in that** the exchanger (40) is according to one of claims 1 to 25, the first fluid being the air flowing in the path (29).

27. Turbomachine (2) according to claim 26, **characterized in that** the turbomachine is a double flow turbomachine (2), comprising a primary flow path (18) and a secondary flow path (20), the path (29) receiving the heat exchanger (40) being the secondary flow path.

28. Turbomachine (2) according to claim 26 or 27, **characterized in that** the internal wall (41) has an internal surface (41.1) and an external surface (41.2), both in contact with air.

29. Turbomachine (2) according to one of claims 26 to 28, **characterized in that** the external wall (42) has an internal surface (42.2) in contact with the air and an external surface (42.1) free from contact with the air.

30. Turbomachine (2) according to one of claims 26 to 30, wherein the external wall (42) has an internal surface (42.2) and the air path (29) is delimited by a casing (28) and by the internal surface (42.2) of the external wall (42).

31. Turbomachine (2) according to one of claims 26 to 30, **characterized in that** the heat exchanger (40) is partially buried in the casing (28).

32. Turbomachine (2) according to claim 31, **characterized in that** at the axial point (M) where the radial height (H) of the envelope (44) is maximum (Hmax), at least 5%, preferably at least 20%, of the height (H) of the heat exchanger (40) is buried in the path (29).

33. Turbomachine (2) according to one of claims 26 to 32, **characterized in that** the main flow direction (15) of the first fluid in the heat exchanger (40) is parallel to the axis of rotation (14) of the turbomachine (2).
